Europäisches Patentamt

European Patent Office

Office européen des brevets

(19)

(11) Veröffentlichungsnummer: **0 186 622**
**B1**

(12) **EUROPÄISCHE PATENTSCHRIFT**

(45) Veröffentlichungstag der Patentschrift:
**13.07.88**

(21) Anmeldenummer: **85810533.1**

(22) Anmeldetag: **13.11.85**

(51) Int. Cl.⁴: **F 16 B 13/04**

(54) **Befestigungselement mit Ankerbolzen und Spreizkeil.**

(30) Priorität: **24.12.84 DE 3447887**

(43) Veröffentlichungstag der Anmeldung:
**02.07.86 Patentblatt 86/27**

(45) Bekanntmachung des Hinweises auf die Patenterteilung:
**13.07.88 Patentblatt 88/28**

(84) Benannte Vertragsstaaten:
**AT CH DE FR GB LI NL SE**

(56) Entgegenhaltungen:
**EP - A - 0 040 300**
**DE - C - 2 558 459**

(73) Patentinhaber: **HILTI Aktiengesellschaft,
FL-9494 Schaan (LI)**

(72) Erfinder: **Herb, Armin, Lärchenstrasse 9,
D-8123 Peissenberg (DE)**

(74) Vertreter: **Wildi, Roland, Hilti Aktiengesellschaft
Patentabteilung, FL-9494 Schaan (LI)**

## Beschreibung

Die Erfindung betrifft ein Befestigungselement mit Ankerbolzen und Spreizkeil, wobei der Ankerbolzen im rückwärtigen Bereich mit Angriffsmitteln zur Lastaufnahme versehen ist und eine sich gegen den vorderen Bereich des Ankerbolzens dessen Umfangskontur nähernde Keilfläche aufweist, entlang welcher der Spreizkeil zur Verspreizung des Elementes verschiebbar ist, wobei sich in ungespreiztem Zustand Ankerbolzen und Spreizkeil im Spreizbereich zu einem kreisrunden Querschnitt ergänzen und der Spreizkeil den Ankerbolzen an seinem rückwärtigen Ende überragt.

Befestigungselemente der obengenannten Art werden hauptsächlich im unteren Lastbereich für Serienbefestigungen eingesetzt. So sind Elemente bekannt (EP-A-0 040 300), deren Ankerbolzen in seinem rückwärtigen Bereich mit einem Flansch versehen ist, welcher einerseits als axialer Anschlag beim Einsetzen und Spreizen des Befestigungselementes sowie zur Lastaufnahme von auf das Befestigungselement einwirkenden Zugkräften dient. Beim Setzvorgang wird dieses Befestigungselement durch das zu befestigende Bauteil hindurch in ein Bohrloch des Aufnahmematerials eingeführt, wobei der Flansch des Ankerbolzens an dem zu befestigenden Bauteil und das zu befestigende Bauteil an der Oberfläche des Aufnahmematerials zur Anlage kommt. Hierauf wird, vorzugsweise mittels Hammerschlägen, der Spreizkeil gegenüber dem Ankerbolzen vorgetrieben, bis das rückwärtige Ende des Spreizkeils mit demjenigen des Ankerbolzens bzw. mit dem Flansch bündig ist.

Ein wesentlicher Nachteil dieses beispielsweise durch Kaltverformung sehr wirtschaftlich herstellbaren und feuerbeständigen Elementes besteht darin, dass die Befestigung, aufgrund des fest am Ankerbolzen angeordneten Flansches, nur noch unter Zerstörung des Elementes lösbar ist. Die Anwendbarkeit des bekannten Elementes ist daher beschränkt.

Der Erfindung liegt die Aufgabe zugrunde, ein wirtschaftlich herstellbares Befestigungselement für lösbare Befestigungen im mittleren und unteren Lastbereich zu schaffen.

Gemäss der Erfindung wird dies dadurch erreicht, dass der rückwärtige Bereich des Ankerbolzens hülsenförmig ausgebildet ist sowie ein Aussengewinde als Lastangriffsmittel aufweist und dass der Spreizkeil den hülsenförmigen Bereich axial durchsetzt.

Durch die hülsenförmige Ausbildung des rückwärtigen, mit Angriffsmitteln zur Lastaufnahme versehenen Bereiches ist es möglich, das Befestigungselement ohne zu befestigendes Bauteil im Aufnahmematerial zu verankern und anschliessend das Bauteil mit dem aus dem Aufnahmematerial ragenden Bereich des Befestigungselementes zu verbinden. Andererseits ist es auch möglich, eine Befestigung bei Bedarf jederzeit ohne Zerstören des Befestigungselementes zu lösen und wiederherzustellen. Der hülsenförmig ausgebildete Bereich des Ankerbolzens ergibt ausserdem eine gute Führung für den ihn axial durchsetzenden Spreizkeil. Eine solche Führung verhindert weitgehend ein Ausknicken oder Verlaufen des Spreizkeiles.

Die Verbindung eines Bauteiles mit dem Befestigungselement kann je nach Art und Grösse der im Betrieb auftretenden Belastung unterschiedlich ausgebildet werden. So kann beispielsweise für Anwendungen mit geringer axialer Belastung, wie Abdeckungen oder dergleichen, eine Rastverbindung genügen. Für höhere Belastungen sowie bei im Betrieb auftretenden Vibrationen weist der rückwärtige, hülsenförmig ausgebildete Bereich des Ankerbolzens zweckmässigerweise ein Aussengewinde als Lastangriffsmittel auf. Eine Gewindeverbindung ermöglicht ausserdem ein genaues Justieren des zu befestigenden Bauteils sowie das Aufbringen einer Vorspannung. Erforderlichenfalls wäre es auch möglich, den Ankerbolzen mit einem Innengewinde zu versehen, wobei ein solcher mit Innengewinde versehener Ankerbolzen gegebenenfalls spezielle Setzwerkzeuge für den Spreizvorgang erfordert.

Beim Vortreiben des Spreizkeils gegenüber dem Ankerbolzen ist es zweckmässig, dafür zu sorgen, dass der Ankerbolzen zusammen mit dem Spreizkeil nicht tiefer in das Bohrloch des Aufnahmematerials hineinrutschen kann. Dies kann beispielsweise durch entsprechende Abstimmung der Bohrlochtiefe auf die Länge des Befestigungselementes erfolgen. Da eine solche Abstimmung insbesondere bei Hohlräume aufweisenden Aufnahmematerialien problematisch sein kann, ist es vorteilhaft, den hülsenförmig ausgebildeten Bereich des Ankerbolzens mit einem die Einführtiefe in ein Bohrloch begrenzenden Anschlag zu versehen. Ein solcher Anschlag kann beispielsweise als die Umfangskontur des hülsenförmigen Bereiches überragende Noppen oder umlaufender Ringwulst ausgebildet werden. Eine weitere Möglichkeit besteht darin, den Anschlag als separates, auf den Ankerbolzen aufsteckbares Element auszubilden. Beispielsweise kann bei einem mit Aussengewinde versehenen Ankerbolzen eine auf das Gewinde aufgeschraubte Mutter den axialen Anschlag bilden.

Erfahrungsgemäss muss davon ausgegangen werden, dass der Durchmesser des Bohrloches im Aufnahmematerial infolge Abnützung des Bohrwerkzeuges innerhalb eines gewissen Toleranzbereiches liegt. Ausserdem kann das Befestigungselement für Aufnahmematerialien von unterschiedlicher Festigkeit verwendet werden. Somit ist es möglich, dass das Befestigungselement im Aufnahmematerial genügend verankert ist, bevor der Spreizkeil eine Lage eingenommen hat, in der das rückwärtige Ende des Spreizkeils mit demjenigen des Ankerbolzens bündig ist. Um bei einem weiteren Eintreiben des Spreizkeiles ein Überspreizen des Befestigungselementes im Aufnahmematerial zu verhindern, weist der Spreizkeil zweckmässigerweise einen als Sollbruchstelle wirkenden, dem Nachrücken des rückwärtigen Teils des Spreizkeiles dienenden Trennsteg auf. Ein solcher Trennsteg kann beispielsweise abgeschert oder axial gestaucht werden. Der Trennsteg ist vorzugsweise so zu dimensionieren, dass bei dessen Zerstörung im ungünstigsten Fall, d.h. in hartem, unnachgiebigem Aufnahmematerial sowie bei kleinstem zulässigem Bohrlochdurchmesser, der erforderliche Verankerungswert erreicht wird.

Die Erfindung soll nachstehend anhand der sie beispielsweise wiedergebenden Zeichnungen näher erläutert werden. Es zeigen:

Fig. 1 ein erfindungsgemässes Befestigungselement, im Längsschnitt,

Fig. 2 eine Draufsicht des Befestigungselementes gemäss Fig. 1,

Fig. 3 einen Querschnitt durch das Befestigungselement gemäss Fig. 2, entlang der Linie III-III,

Fig. 4 einen Ankerbolzen einer weiteren Ausführung eines Befestigungselementes,

Fig. 5 einen Spreizkeil einer weiteren Ausführung eines erfindungsgemässen Befestigungselementes,

Fig. 6 einen Querschnitt durch den Spreizkeil gemäss Fig. 5, entlang der Linie VI-VI,

Fig. 7 eine Befestigung mittels eines erfindungsgemässen Befestigungselementes.

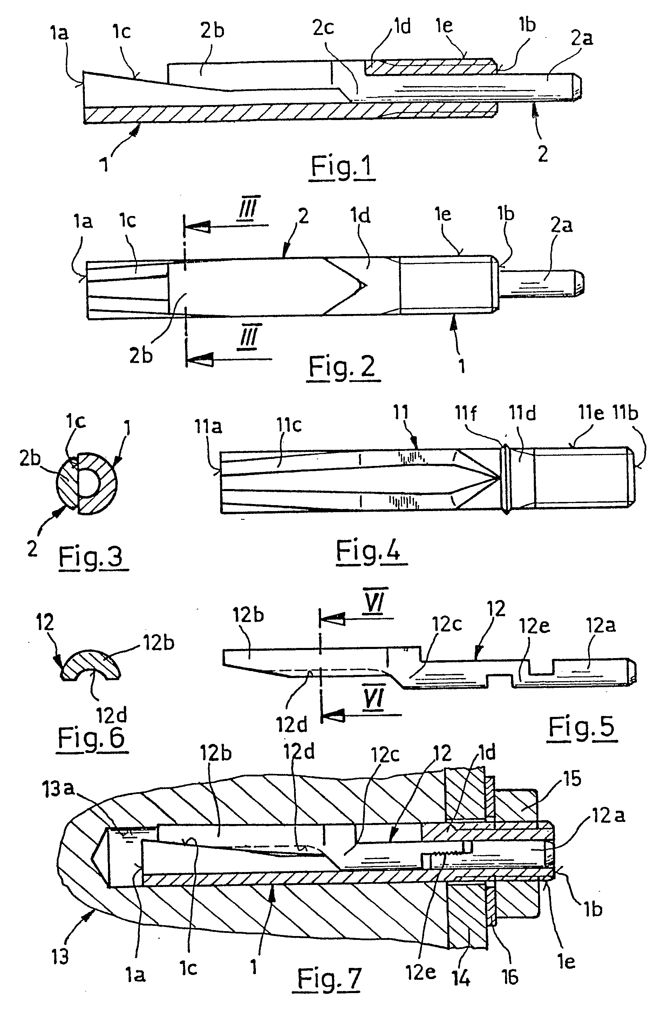

Das aus den Fig. 1 bis 3 ersichtliche Befestigungselement besteht aus einem insgesamt mit 1 bezeichneten Ankerbolzen und einem insgesamt mit 2 bezeichneten Spreizkeil. Der Ankerbolzen 1 weist ein in Setzrichtung vorderes Ende 1a sowie ein rückwärtiges Ende 1b auf. Der an das vordere Ende 1a angrenzende Spreizbereich ist mit einer zur Längsachse des Befestigungselementes geneigten Keilfläche 1c versehen. Der Ankerbolzen 1 weist einen an das rückwärtige Ende 1b angrenzenden, hülsenförmigen Bereich 1d auf. Der hülsenförmige Bereich 1d ist mit einem Aussengewinde 1e als Angriffsmittel zur Lastaufnahme versehen. Der Spreizkeil 2 weist einen im wesentlichen zylindrisch ausgebildeten rückwärtigen Bereich 2a sowie einen teilweise keilförmig ausgebildeten Spreizbereich 2b auf. Der rückwärtige Bereich 2a des Spreizkeils 2 durchsetzt den hülsenförmigen Bereich 1d des Ankerbolzens 1. Zwischen dem rückwärtigen Bereich 2a und dem Spreizbereich 2b des Spreizkeils 2 befindet sich eine Kröpfung 2c. Wie insbesondere Fig. 3 zeigt, ergänzen sich der Ankerbolzen 1 und der Spreizkeil 2 im Spreizbereich 2b in ungespreiztem Zustand zu einem kreisrunden Querschnitt. Der rückwärtige Bereich 2a des Spreizkeils 2 überragt dabei das rückwärtige Ende 1b des Ankerbolzens 1.

Der aus Fig. 4 ersichtliche, insgesamt mit 11 bezeichnete Ankerbolzen weist ebenfalls ein in Setzrichtung vorderes Ende 11a sowie ein rückwärtiges Ende 11b auf. Der an das vordere Ende 11a angrenzende Spreizbereich des Ankerbolzens 11 ist mit einer Keilfläche 11c versehen. Der Ankerbolzen 11 wist ferner einen an das rückwärtige Ende 11b angrenzenden, hülsenförmigen Bereich 11d auf, der mit einem Aussengewinde 11e versehen ist. Um beim Einführen des Ankerbolzens 11 in ein Bohrloch die Einführtiefe zu begrenzen, weist der Ankerbolzen 11 im hülsenförmigen Bereich 11d einen Ringwulst 11f auf. Anstelle des Ringwulstes 11f können jedoch auch einzelne Noppen oder Vorsprünge vorgesehen werden.

Der aus Fig. 5 und 6 ersichtliche, insgesamt mit 12 bezeichnete Spreizkeil weist ebenfalls einen rückwärtigen, im wesentlichen zylindrisch ausgebildeten Bereich 12a sowie einen teilweise keilförmig ausgebildeten Spreizbereich 12b auf. Zwischen dem rückwärtigen Bereich 12a und dem Spreizbereich 12b befindet sich eine Kröpfung 12c. Im Unterschied zu der aus Fig. 1 und 2 ersichtlichen Ausführung weist der Spreizkeil 12 zusätzlich eine in den Spreizbereich 12b auslaufende Hohlkehle 12d sowie einen im rückwärtigen Bereich 12a angeordneten, als Sollbruchstelle wirkenden Trennsteg 12e auf. Dieser Trennsteg 12e verhindert ein Überspreizen des Befestigungselementes und ermöglicht ein Nachrücken des rückwärtigen Teils des Spreizkeiles 12.

Fig. 7 zeigt eine fertige Befestigung eines aus einem Ankerbolzen 1 gemäss Fig. 1 und 2 sowie einem Spreizkeil 12 gemäss Fig. 5 bestehenden Befestigungselementes. Das Befestigungselement ist in einem Bohrloch 13a eines insgesamt mit 13 bezeichneten Aufnahmematerials verankert. Die Verankerung des Befestigungselementes erfolgt durch Vortreiben des Spreizkeiles 12 gegenüber dem Ankerbolzen 1. Dabei läuft der Spreizbereich 12b auf der Keilfläche 1c des Ankerbolzens 1 auf und bewirkt ein Verkeilen des Befestigungselementes im Bohrloch 13a. Das Befestigungselement kann entweder zuerst im Aufnahmematerial 13 verankert und dann ein zu befestigendes Bauteil 14 auf den das Aufnahmematerial 13 überragenden, hülsenförmigen Bereich 1d aufgesteckt werden, oder das Befestigungselement kann durch das zu befestigende Bauteil 14 hindurch in das Bohrloch 13a des Aufnahmematerials 13 eingeführt werden. Um das Bauteil 14 auf dem Aufnahmematerial 13 festzuspannen, ist eine Mutter 15 unter Zwischenlegen einer Unterlegscheibe 16 auf das Gewinde 1e des Ankerbolzens 1 aufgeschraubt. Die Mutter 15 kann auch als axialer Anschlag beim Einführen des Ankerbolzens ins Aufnahmematerial 13 dienen. Beim Eintreten des Spreizkeils 12 ist der Trennsteg 12e abgeschert worden. Dadurch wird auch in hartem Aufnahmematerial 13 oder relativ kleinem Durchmesser des Bohrloches 13a ein Vortreiben des rückwärtigen Bereiches 12a des Spreizkeils 12 ermöglicht, bis dessen rückwärtiges Ende bündig ist mit dem rückwärtigen Ende 1b des Ankerbolzens 1. Somit ergibt sich in jedem Fall eine optisch einwandfreie Befestigung. Erforderlichenfalls kann die Mutter 15 zum Aufbringen einer Vorspannung zusätzlich angezogen oder nötigenfalls auch wieder gelöst werden.

**Patentansprüche**

1. Befestigungselement mit Ankerbolzen und Spreizkeil, wobei der Ankerbolzen im rückwärtigen Bereich mit Angriffsmitteln zur Lastaufnahme versehen ist und eine sich gegen den vorderen Bereich des Ankerbolzens dessen Umfangskontur nähernde Keilfläche aufweist, entlang welcher der Spreizkeil zur Verspreizung des Elementes verschiebbar ist, wobei sich in ungespreiztem Zustand Ankerbolzen und Spreizkeil im Spreizbereich zu einem kreisrunden Querschnitt ergänzen und der Spreizkeil den Ankerbolzen an seinem rückwärtigen Ende überragt, dadurch gekennzeichnet, dass der rückwärtige Bereich des Ankerbolzens (1, 11) hülsenförmig ausgebildet ist sowie ein Aussengewinde (1e, 11e) als Lastangriffsmittel aufweist und dass der Spreizkeil (2, 12) den hülsenförmigen Bereich (1d, 11d) axial durchsetzt.

2. Befestigungselement nach Anspruch 1, dadurch gekennzeichnet, dass der hülsenförmig ausgebildete Bereich (11d) des Ankerbolzens (11) mit einem die Einführtiefe in ein Bohrloch begrenzenden Anschlag (11f) versehen ist.

3. Befestigungselement nach Anspruch 1 oder 2, dadurch gekennzeichnet, dass der Spreizkeil (12) einen als Sollbruchstelle wirkenden, dem Nachrücken des rückwärtigen Teils des Spreizkeils (12) dienenden Trennsteg (12e) aufweist.

## Claims

1. A fastening element comprising an anchor bolt and an expansion wedge, in which respect the anchor bolt is provided in its rearward region with application means for the load reception and has a wedge surface which towards the front region of the anchor bolt approximates to the circumferential contour thereof and along which the expansion wedge is displaceable for the expansion of the element, in which respect in the non-expanded state the anchor bolt and the expansion wedge complement one another in the expansion region to form a circular cross-section and the expansion wedge projects beyond the anchor bolt at its rearward end, characterised in that the rearward region of the achor bolt (1, 11) is sleeve-shaped in design and has an external thread (1e, 11e) as load application means and in that the expansion wedge (2, 12) axially penetrates the sleeve-shaped region (1d, 11d).

2. A fastening element according to claim 1, characterised in that the region (11d) of sleeve-shaped design of the anchor bolt (11) is provided with a stop (11f) which limits the depth of insertion into a drillhole.

3. A fastening element according to claim 1 or 2, characterised in that the expansion wedge (12) has a separating web (12e) which acts as a predetermined breaking point and which serves for the moving up ot the rearward part of the expansion wedge (12).

## Revendications

1. Elément de fixation avec boulon d'ancrage et clavette d'expansion, le boulon d'ancrage étant muni, dans sa partie arrière, d'organes de fixation pour l'application de la charge et présentant une surface de clavette qui s'approche de contour périphérique de la partie avant du boulon d'ancrage le long duquel la clavette d'expansion peut être déplacée en vue de l'écartement de l'élément, le boulon d'ancrage et la clavette d'expansion se complétant dans la zone d'écartement, à l'état non écarté, en une section circulaire et la clavette d'expansion dépassant du boulon d'ancrage à l'extrémité postérieure de celui-ci, caractérisé en ce que la partie arrière du boulon d'ancrage (1, 11) est conformée en douille et présente un filetage extérieur (1e, 11e) en tant qu'organe d'application de la charge, et que la clavette d'expansion (2, 12) traverse la section (1d, 11d) en forme de douille dans le sens axial.

2. Elément de fixation selon la revendication 1, caractérisé en ce que la section (11d) conformée en douille du boulon d'ancrage (11) est munie d'une butée (11f) qui limite la profondeur de pénétration dans un alésage.

3. Elément de fixation selon l'une des revendications 1 ou 2, caractérisé en ce que la clavette d'expansion (12) présente une barrette de séparation (12e) agissant comme zone de rupture imposée et servant à l'enfoncement supplémentaire de la partie arrière de la clavette d'expansion (12).

Fig.1

Fig.2

Fig.3

Fig.4

Fig.6

Fig.5

Fig.7